# EUROPÄISCHE PATENTSCHRIFT

(11) **EP 3 148 475 B1**
(45) Veröffentlichungstag und Bekanntmachung des Hinweises auf die Patenterteilung: **03.07.2019**
(21) Anmeldenummer: 15723726.4
(22) Anmeldetag: 22.05.2015
(51) Int. Cl.: A61C 13/00

(54) **VERFAHREN ZUR HERSTELLUNG EINES DENTALEN PROTHESENBASISHALBZEUGS**
METHOD FOR PRODUCING A DENTAL PROSTHESIS-BASE SEMI-FINISHED PRODUCT
PROCÉDÉ DE FABRICATION D'UN PRODUIT SEMI-FINI DE BASE DE PROTHÈSE DENTAIRE

(30) Priorität: 27.05.2014 DE 102014107418
(43) Veröffentlichungstag der Anmeldung: 05.04.2017
(73) Patentinhaber: Kulzer GmbH, 63450 Hanau (DE)
(72) Erfinder: BÖHM, Uwe, 61350 Bad Homburg (DE); SPATZ, Marco, 63811 Sailauf (DE)
(74) Vertreter: Schultheiss & Sterzel Patentanwälte PartG mbB
(86) Internationale Anmeldenummer: PCT/EP2015/061443
(87) Internationale Veröffentlichungsnummer: WO 2015/181093

(56) Entgegenhaltungen:
- US-A1- 2005 023 710
- US-A1- 2010 291 505
- US-A1- 2014 008 826
- US-A1- 2014 113 248

## Beschreibung

Die Erfindung betrifft ein Verfahren zur Herstellung eines dentalen Prothesenbasishalbzeugs und ein Verfahren zur Herstellung einer dentalen Prothesenbasis.

Die Erfindung betrifft auch eine computergesteuerte Vorrichtung zur Umsetzung eines Verfahrens zur Herstellung eines dentalen Prothesenbasishalbzeugs oder eines Verfahrens zur Herstellung einer dentalen Prothesenbasis sowie ein Prothesenbasishalbzeug und eine Prothesenbasis hergestellt mit solchen Verfahren.

Die Erfindung betrifft somit die Herstellung von vorkonfektionierten Halbzeugen zur Herstellung von individualisierten Prothesenbasen zur Weiterverarbeitung für partielle Kunststoffprothesen (Teilprothesen) und totale Kunststoffprothesen (Totalprothesen), die maschinell im CAM-Verfahren (CAM - Computer-Aided Manufacturing, Deutsch: rechner-unterstützte Fertigung) produziert werden. Die individualisierten Prothesenbasen können auch als Arbeitsmodell aus Wachs verwendet werden, mit dem eine Einpassung bei einem Patienten durchgeführt wird und die als Grundlage zur Herstellung einer partiellen Kunststoffprothese (Teilprothesen) oder einer totalen Kunststoffprothesen (Totalprothesen) dient. Dabei werden die Prothesenbasishalbzeuge, wie auch die Prothesenbasen und die Dentalprothesen computergestützt mit CAD-Verfahren (CAD - Computer-Aided Design, Deutsch: rechnerunterstützte Konstruktion) konstruiert.

Der gängige Weg ist die analoge Erstellung von Dentalprothesen. Zur Herstellung der Prothesenbasis wird derzeit also meist ein analoges Verfahren verwendet, bei dem zunächst ein Abdruck des zahnlosen Kiefers des Patienten genommen wird. Aus diesem Abdruck wird eine Form gefertigt, die mit einem zahnfleischfarbenen Kunststoff ausgegossen wird. Nach Aushärtung des Kunststoffs wird dieser nachbearbeitet, um die gewünschte Form zu erhalten. Anschließend werden die separat hergestellten Prothesenzähne eingesetzt.

Zur Herstellung der Prothese werden Zähne manuell und einzeln auf einer Wachsbasis aufgestellt. Diese Wachsprothese wird im nächsten Schritt in einer Küvette mit Gips eingebettet, um dann nach Aushärten des Gipses die Wachsbasis mit heißem Wasser herauszuwaschen und einen Hohlraum für den Prothesenkunststoff zu schaffen. Die Prothesenzähne verbleiben dabei im Gips. Ein entsprechender Kunststoff wird in den Hohlraum injiziert und man erhält nach Aushärtung des Kunststoffs die Prothese.

Bei der Aufstellung der konfektionierten Zähne werden diese der jeweiligen Mundsituation des Patienten vom Zahntechniker und gegebenenfalls auch vom Zahnarzt angepasst und beschliffen.

Ein solches Verfahren ist aus der WO 91/07141 A1 bekannt, wobei bei diesem Verfahren eine Prothesenbasis auf der Basis eines Abdrucks aus einem Kunststoffblock gefräst wird. Es gibt bereits erste Verfahren, wie beispielsweise die aus der DE 10 2009 056 752 A1 oder der WO 2013 124 452 A1 bekannten Verfahren, bei denen eine dentale Teil- beziehungsweise Totalprothese digital aufgestellt und über CAD-CAM-Verfahren produziert wird. Optimierte Verfahren zur Herstellung von Dentalprothesen mit CAD-CAM-Verfahren sind zudem aus der EP 1 444 965 A2 bekannt. Aus der WO 2013 068 124 A2 ist ein Fräsblock mit vorgeformten Prothesenzähnen bekannt. Nachteilig ist hieran, dass die Prothesenzähne aus dem gleichen Material wie die Basis bestehen und bei einer Beschädigung das ganze Gebiss getauscht werden muss und die fertig konstruierte Prothese nur mit großem Aufwand an die Bedürfnisse des Patienten (beispielsweise bezüglich der Zahnfarbe oder der Okklusion und Zahnstellung) angepasst werden kann. Ein weiterer Nachteil liegt darin, dass die Basis und der Prothesenzahn (beziehungsweise die Prothesenzahnkrone) unterschiedliche Anforderungen haben aber aus dem gleichen Material gefertigt sind. So soll der Zahn vorrangig kauen und dabei unbeschädigt bleiben. Die Basis sollte hingegen die auftretenden Kräfte über die Schleimhaut verteilen. Dies kann bei der Verwendung nur eines Materials zu Problemen führen. Damit der Fräsblock für möglichst viele verschiedene Formen von Dentalprothesen anwendbar bleibt, muss er groß sein und deshalb müssen meist große Mengen des Materials des Fräsblocks abgetragen werden. Neben der Verschwendung des abgetragenen Materials sind dabei die zeitaufwendige Fräsarbeit und die Abnutzung der Fräswerkzeuge nachteilig.

Aus der DE 20 2006 006 286 U1 ist ein runder Rohling zur Herstellung einer Zahnprothese bekannt. Dieser Rohling (der sogenannten Ronde) wird in eine CAM-Fräsmaschine eingespannt und auf Basis eines CAD-Modells automatisch abgefräst. Aktuelle Verfahren fräsen aus einem solchen vollen Block (der Ronde) eine lediglich 2 mm bis 3 mm dicke Prothesenbasis. Nachteile sind auch bei diesem Verfahren einerseits eine sehr hohe Materialverschwendung, die je nach anatomischer Situation des jeweiligen Patienten problemlos über 90% betragen kann. Das führt andererseits zu einer zeitintensiven Bearbeitungszeit durch die CAM-Vorrichtung, da sehr viel Material abgetragen werden muss. Darüber hinaus ist die Abnutzung der jeweiligen Fräswerkzeuge relativ hoch, wodurch die Kosten für den Betrieb der Fräse steigen. Aus der US2014/0008826 ist ein Verfahren bekannt, um eine Zahnrestauration mittels CAD zu konstruieren.

Nachteilig ist hieran ferner, dass es relativ lange dauert, bis die Prothesenbasis hergestellt ist. Zudem nutzt sich durch die Bearbeitung des Rohlings der Fräskopf ab und muss in regelmäßigen Abständen erneuert werden. Das abgefräste Material (die Frässpäne) muss entsorgt oder recycelt werden.

Die Aufgabe der Erfindung besteht also darin, die Nachteile des Stands der Technik zu überwinden. Insbesondere sollen ein Verfahren, ein Rohstoff (Bauteil) und/oder ein Produkt bereitgestellt werden, mit dem eine möglichst einfache, vollständige und kostengünstige Herstellung der Prothesenbasis und damit der Dentalprothese möglich ist. Der Fräskopf beziehungsweise das Werkzeug zum Durchführen des subtraktiven CAM-Verfahrens soll dabei möglichst wenig beansprucht werden. Zudem soll die Herstellung der Prothesenbasis möglichst schnell erfolgen können. Gleichzeitig soll die zu fertigende Prothesenbasis aber mit modernen CAD-CAM-Verfahren an die individuellen Bedürfnisse des Patienten anpassbar sein und automatisch zu fertigen sein.

Die Aufgaben der Erfindung werden gelöst durch ein Verfahren zur Herstellung eines dentalen Prothesenbasishalbzeugs mit den Schritten:
1) Erfassen und Digitalisieren der Mundraumsituation eines Patienten, wobei ein digitales dreidimensionales Mundraummodell des Patienten erzeugt wird, oder Bereitstellen eines digitalen dreidimensionalen Mundraummodells der Mundraumsituation eines Patienten;
2) Durchführen einer ersten Berechnung, bei der ein digitales dreidimensionales erstes Modell (A) einer Prothesenbasis berechnet wird, wobei das Mundraummodell der Mundraumsituation bei der ersten Berechnung zugrunde gelegt wird;
3) Durchführen einer zweiten Berechnung, bei der ein digitales dreidimensionales zweites Modell (B) eines Prothesenbasishalbzeugs aus dem ersten Modell (A) der Prothesenbasis berechnet wird, wobei zu dem dreidimensionalen Modell (A) der Prothesenbasis zumindest bereichsweise Volumen hinzugefügt wird; und
4) Herstellung des dentalen Prothesenbasishalbzeugs mit einem Rapid-Prototyping-Verfahren, wobei bei dem Rapid-Prototyping-Verfahren ein CAM-Verfahren angewendet wird und das digitale dreidimensionale zweite Modell (B) des Prothesenbasishalbzeugs dem CAM-Verfahren zugrunde gelegt wird.

Zur Verständlichkeit sei angemerkt, dass es bei erfindungsgemäßen Verfahren nur jeweils ein Modell der Prothesenbasis, nämlich das erste Modell (A), und ein Modell des Prothesenbasishalbzeugs, nämlich das zweite Modell (B) gibt. Es gibt also nur einen Datensatz, der das Modell (A) der Prothesenbasis bildet und einen Datensatz, der das Modell (B) des Prothesenbasishalbzeugs bildet. Es gibt also kein erstes Modell des Prothesenbasishalbzeugs und kein zweites Modell der Prothesenbasis. Die Formulierungen wurden nur deshalb so gewählt, damit immer eindeutig zu unterscheiden ist und klargestellt ist, von welchem Modell die Rede ist und in welcher Reihenfolge die beiden Modelle (A, B) berechnet werden.

Es reicht bereits aus, wenn einige wesentliche Parameter des ersten Modells (A) der Prothesenbasis festgelegt werden, um daraus das zweite Modell (B) des Prothesenbasishalbzeugs zu berechnen. Anschließend kann das zweite Modell (B) der Prothesenbasis noch verfeinert werden. Das erste Modell (A) der Prothesenbasis muss also noch nicht vollständig sein, um daraus das zweite Modell (B) des Prothesenbasishalbzeugs zu berechnen.

Das digitale dreidimensionale Modell der Mundraumsituation des Patienten kann beispielsweise durch eine Stereokamera aufgenommen werden oder aufgenommen worden sein, wobei die Stereokamera in den Mundraum des Patienten eingeführt wird. Alternativ oder auch zusätzlich kann ein Kunststoffabdruck des Mundraums genommen werden, der dann anschließend extern vermessen beziehungsweise aufgenommen wird. Nach der Aufnahme werden die Daten digitalisiert. Dabei können verschiedene Korrekturverfahren angewendet werden, um die Qualität der Daten zu verbessern.

Bei der ersten Berechnung des digitalen dreidimensionalen ersten Modells (A) der Prothesenbasis werden die anatomischen Gegebenheiten im Mundraum berücksichtigt, um eine passende Prothesenbasis oder mehrere passende Prothesenbasen zu bestimmen, bei der oder bei denen die Kaufunktion des Kiefers des Patienten mit der mit Prothesenzähnen bestückten Prothese gewährleistet beziehungsweise bevorzugt optimiert ist. Solche CAD-Verfahren sind beispielsweise aus der EP 1 444 965 A2 bekannt. Bei solchen Modellen ist es vorteilhaft, wenn die Positionen und Ausrichtungen der in der Prothesenbasis zu befestigenden Prothesenzähne bekannt sind. In dem Modell (A) der Prothesenbasis sind dann Ausnehmungen und/oder Oberflächen zum Anordnen und Befestigen der Prothesenzähne vorgesehen. Bevorzugt sind diese Ausnehmungen und/oder Oberflächen derart indexiert, dass entsprechend als Negativform indexierte Prothesenzähne nur mit einer eindeutigen Ausrichtung an oder in der aus dem Modell (A) erzeugten Prothesenbasis befestigt werden können.

Vorliegend wird im Rahmen der Erfindung der allgemein bekannte Begriff Rapid-Prototyping-Verfahren für ein Herstellungsverfahren verwendet, bei dem das Prothesenbasishalbzeug mit einem für Rapid-Prototyping üblichen Herstellungsverfahren hergestellt wird. Da es sich bei dem Prothesenbasishalbzeug nicht um einen Prototypen sondern um ein halbfertiges Bauteil handelt, könnte anstatt des Begriffs "Rapid-Prototyping-Verfahren" auch die in solchen Zusammenhängen gelegentlich gebrauchten Begriffe "Rapid Manufacturing", "generatives Fertigungsverfahren", "Rapid-Product-Development", "Advanced Digital Manufacturing" oder "E-Manufacturing" verwendet werden.

Erfindungsgemäße Verfahren können sich dadurch auszeichnen, dass das Volumen nur an den Oberflächen der Prothesenbasis, die die Gaumenplatte beziehungsweise die Auflagefläche auf dem Zahnfleisch und die Ausnehmungen oder die Flächen zur Verbindung der Prothesenzähne zugegeben wird, um die äußere Form des zweiten Modells (B) der Prothesenbasishalbzeugs zu berechnen. Dies kann insbesondere dann sinnvoll sein, wenn das angewendete Rapid-Prototyping-Verfahren ausreichend genau ist, das heißt mit einer Genauigkeit von mindestens 500 µm oder weniger als 500 µm umgesetzt wird.

Es wird mit erfindungsgemäßen Verfahren auch vorgeschlagen, dass beim Durchführen der ersten Berechnung des ersten Modells (A) der Prothesenbasis weitere Daten bei der Berechnung zugrunde gelegt werden, vorzugsweise Daten zur Okklusion, Position und Ausrichtung der einzusetzenden Dentalprothesen, die Position einer Markierung zur Ausrichtung der zu erzeugenden Prothesenbasis, Daten, die mit Hilfe einer Bissschablone inklusive Bisswällen gewonnen wurden, und/oder Daten die normalerweise am Patienten zur Einstellung eines Artikulators aufgenommen werden.

Die Durchführung der ersten Berechnung des ersten Modells (A) der Prothesenbasis erfolgt in Schritt 2).

Hierdurch wird eine besser zum Patienten passende Prothesenbasis erzeugt. Das Prothesenbasishalbzeug kann dazu genauer zur Prothesenbasis passend erzeugt werden, da keine Ausgleichsvolumen zur Nachbearbeitung der Prothesenbasis in dem Prothesenbasishalbzeug mit vorgesehen, beziehungsweise vorgehalten werden müssen. Je genauer die endgültige Form der Prothesenbasis festgelegt ist, desto exakter kann das Prothesenbasishalbzeug gefertigt werden, wodurch weniger Material zur Herstellung des Prothesenbasishalbzeugs verbraucht wird, die Werkzeuge zum Herstellen der Prothesenbasis aus dem Prothesenbasishalbzeug geschont werden und die Geschwindigkeit zur Herstellung des Prothesenbasishalbzeugs sowie zur Herstellung der Prothesenbasis aus dem Prothesenbasishalbzeug erhöht wird.

Es wird mit der vorliegenden Erfindung auch vorgeschlagen, dass an wenigstens einer Seite des Prothesenbasishalbzeugs, bevorzugt an einer bukkalen Seite des Prothesenbasishalbzeugs, eine Halterung zur Befestigung des Prothesenbasishalbzeugs an einer CAM-Vorrichtung, insbesondere einer CAM-Fräsmaschine angeordnet ist. Hierdurch kann sichergestellt werden, dass das Prothesenbasishalbzeug in der richtigen Orientierung und der richtigen Position in die CAM-Vorrichtung zum Herstellen der Prothesenbasis eingespannt werden kann.

Bei erfindungsgemäßen Verfahren kann auch vorgesehen sein, dass bei der Herstellung des Prothesenbasishalbzeugs ein Rapid-Prototyping-Verfahren angewendet wird, bei dem das Prothesenbasishalbzeug mit einer Genauigkeit von 100 µm bis 8 mm hergestellt wird, bevorzugt mit einer Genauigkeit von 100 µm bis 1 mm hergestellt wird, besonders bevorzugt mit einer Genauigkeit von 500 µm bis 1 mm hergestellt wird.

Solche Rapid-Prototyping-Verfahren sind schnell und relativ kostengünstig umsetzbar, im Vergleich zu sehr präzisen Rapid-Prototyping- beziehungsweise CAM-Verfahren.

Mit einer Weiterbildung der Erfindung kann auch vorgesehen sein, dass bei der Herstellung des Prothesenbasishalbzeugs ein additives Rapid-Prototyping-Verfahren angewendet wird, insbesondere 3D-Druckverfahren.

Additive Rapid-Prototyping-Verfahren haben den Vorteil, dass keine voluminösen Rohkörper bereitgehalten werden müssen und nur das zur Herstellung notwendige Material oder nur wenig mehr als das zur Herstellung notwendige Material verbraucht wird. 3D-Druckverfahren werden immer kostengünstiger, da die 3D-Drucker zunehmend als Massenprodukt für Endkunden angeboten werden.

Des Weiteren kann vorgesehen sein, dass bei der Herstellung des Prothesenbasishalbzeugs eines der Verfahren aus der folgenden Liste angewendet wird: Fused Layer Modeling/Manufacturing (FLM) von Kunststoffen oder Wachsen, Fused Deposition Modeling (FDM) von Kunststoffen oder Wachsen, insbesondere von Acrylnitril-Butadien-Styrol-Copolymerisat oder Polylactid, Laminated Object Modelling (LOM) von Kunststofffolien, Layer Laminated Manufacturing (LLM) von Kunststofffolien, Elektronenstrahlschmelzen (EBM) von Kunststoffen oder Wachsen, Multi Jet Modeling (MJM) von Wachsen oder Kunststoffen, insbesondere von Thermoplasten oder UV-empfindlichen Photopolymeren, Polyamidguss von Polyamiden, Selektives Laserschmelzen (SLM) von Kunststoffen oder Wachsen, Selektives Lasersintern (SLS) von Kunststoffen, insbesondere von Thermoplasten, besonders bevorzugt von Polycarbonaten, Polyamiden oder Polyvinylchlorid, 3-D-Printing (3DP) von Kunststoffgranulat oder Kunststoffpulver, Space Puzzle Molding (SPM) von Kunststoffen oder Wachsen, Stereolithografie (STL oder SLA) von Kunststoffen oder Wachsen, insbesondere von einem flüssigen Harz, Duromer oder Elastomer, Digital Light Processing (DLP) von photopolymerisierbaren flüssigen Kunststoffen, wobei das Digital Light Processing (DLP) von photopolymerisierbaren flüssigen Kunststoffen und die Stereolithografie (STL oder SLA) von Kunststoffen oder Wachsen, insbesondere mit einem flüssigen Harz, Duromer oder Elastomer, besonders bevorzugt werden.

Als photopolymerisierbaren flüssigen Kunststoff zur Umsetzung eines Digital Light Processing (DLP) wird im Rahmen der vorliegenden Erfindung bevorzugt ein mit Radikalen beziehungsweise radikalisch polymerisierbarer Polymethylmethacrylat-Kunststoff (PMMA-Kunststoff) verwendet.

Ferner kann vorgesehen sein, dass das Prothesenbasishalbzeug aus Polymethylmethacrylat (PMMA), Polyetherketon (PEK), Polyetheretherketon (PEEK), Polyamid (PA), Polycarbonat (PC) oder Polyurethan (PU) gefertigt wird. Diese Materialien sind für die nachfolgende Bearbeitung des Prothesenbasishalbzeugs mit CAM-Verfahren besonders gut geeignet. Zudem lassen sich daraus auch ästhetisch passende Prothesenbasen fertigen.

Solche Verfahren sind bekannt und können gut auf das gewünschte Verfahren zur Herstellung des Prothesenbasishalbzeugs angewendet werden.

Gemäß einer bevorzugten Ausgestaltung der Erfindung kann vorgesehen sein, dass das Prothesenbasishalbzeug aus einem Kunststoff oder einem Wachs hergestellt wird, insbesondere aus einem rosa oder zahnfleischfarbenen Kunststoff hergestellt wird, wobei als Kunststoff bevorzugt ein Polymethylmethacrylat (PMMA) verwendet wird.

Kunststoffe (insbesondere PMMA) sind besonders gut zur Umsetzung der Verfahren und als Werkstoff für Prothesenbasen beziehungsweise Prothesenbasishalbzeuge geeignet. Die Färbung kann auch an die Gegebenheiten beim Patienten angepasst werden.

Bei einer Verwendung von Wachs als Material für die Herstellung der Prothesenbasis beziehungsweise des Prothesenbasishalbzeugs dient die aus Wachs hergestellte Prothesenbasis beziehungsweise das aus Wachs hergestellte Prothesenbasishalbzeug nur zum Einpassen beim Patienten, also nur als Arbeitsmodell und nicht als endgültige Prothesenbasis. Die aus Wachs hergestellte Prothesenbasis beziehungsweise das aus Wachs hergestellte Prothesenbasishalbzeug wird nach dem Einpassen beim Patienten genutzt, um auf dessen Grundlage eine endgültige Prothesenbasis zu fertigen.

Vorteilhafte Ausgestaltungen der Erfindung können sich dadurch auszeichnen, dass bei der zweiten Berechnung zur Berechnung des digitalen dreidimensionalen zweiten Modells (B) des Prothesenbasishalbzeugs zumindest bereichsweise ein Abstandsvektor zu dem ersten Modell (A) der Prothesenbasis addiert wird, bevorzugt allseitig oder an jeder Oberfläche des ersten Modells (A) der Abstandsvektor zu dem ersten Modell (A) der Prothesenbasis addiert wird, wobei der Abstandsvektor senkrecht zu der Oberfläche des ersten Modells (A) orientiert ist und der Betrag des Abstandsvektors zwischen 100% und 200% so groß gewählt wird, wie die Genauigkeit des angewendeten Rapid-Prototyping-Verfahrens, bevorzugt zwischen 100% und 150% so groß gewählt wird, wie die Genauigkeit des angewendeten Rapid-Prototyping-Verfahrens.

Durch diese Maßnahmen wird erreicht, dass das Prothesenbasishalbzeug nur an den gewünschten Stellen dicker als die zu erzeugende Prothesenbasis ist, wobei die zusätzliche Dicke auf die Genauigkeit des angewendeten Rapid-Prototyping-Verfahrens angepasst ist, so dass bei der Herstellung der Prothesenbasis aus dem Prothesenbasishalbzeug möglichst wenig Material verbraucht wird.

Ferner kann vorgesehen sein, dass bei der Berechnung des zweiten Modells (B) des Prothesenbasishalbzeugs eine Markierung an der Oberfläche des Modells eingerechnet wird, die zur Positionierung und Ausrichtung des fertig hergestellten Prothesenbasishalbzeugs angewendet werden kann oder angewendet wird.

Mit einer solchen Markierung kann die nachfolgende Bearbeitung vereinfacht werden, da das Prothesenbasishalbzeug leichter oder sogar vollautomatisiert in der gewünschten (richtigen) Orientierung in die Einrichtung zur nachgelagerten Bearbeitung eingesetzt beziehungsweise eingespannt oder befestigt wird oder bei der Nachbearbeitung das bereits in die Einrichtung zur nachgelagerten Bearbeitung eingesetzte beziehungsweise eingespannte Prothesenbasishalbzeug in der Einrichtung richtig orientiert wird.

Gemäß einer bevorzugten Ausführung der Erfindung kann vorgesehen sein, dass bei der Berechnung des zweiten Modells (B) des Prothesenbasishalbzeugs zumindest an der Gaumenplatte und/oder der Auflagefläche auf die Zahnbögen des Modells (A) der Prothesenbasis Volumen hinzugefügt wird.

Für viele Anwendungen ist es ausreichend, wenn die Gaumenplatte mit einem exakteren Verfahren, wie beispielsweise einer 4-Achsfräse oder 5-Achsfräse, bearbeitet wird. Durch eine Bearbeitung der Prothesenzähne kann eine okklusale Anpassung auch bei der Bearbeitung der Prothesenzähne erfolgen.

Bei erfindungsgemäßen Verfahren kann es bereits ausreichen, wenn die Flächen des Prothesenbasishalbzeugs außer die Gaumenplatte beziehungsweise die Auflagefläche auf dem Zahnfleisch und die Ausnehmungen oder die Flächen zur Verbindung der Prothesenzähne geglättet werden, sofern das Rapid-Prototyping-Verfahren ausreichend genau ist (eine Genauigkeit von 500 µm sollte dabei mindestens gegeben sein).

Die der Erfindung zugrundeliegenden Aufgaben werden auch gelöst durch ein Verfahren zur Herstellung einer dentalen Prothesenbasis aufweisend ein erfindungsgemäßes Verfahren zur Herstellung eines dentalen Prothesenbasishalbzeugs, bei dem nach der Herstellung des Prothesenbasishalbzeugs die Prothesenbasis mit einem subtraktiven CAM-Verfahren auf Basis der ersten Modells (A) der Prothesenbasis aus dem Prothesenbasishalbzeug gefertigt wird, insbesondere gefräst wird.

Dabei kann vorgesehen sein, dass als subtraktives CAM-Verfahren ein subtraktives Fräsverfahren angewendet wird, wobei bevorzugt mit dem subtraktiven Fräsverfahren eine Genauigkeit erreicht wird, die höher ist als die Genauigkeit des Rapid-Prototyping-Verfahrens, besonders bevorzugt eine Genauigkeit von zumindest 50 µm erreicht wird, ganz besonders bevorzugt eine Genauigkeit von zumindest 10 µm erreicht wird.

Computergesteuerte 4-Achs-Fräsen oder 5-Achs-Fräsen sind für erfindungsgemäße Verfahren besonders gut geeignet.

Bei erfindungsgemäßen Verfahren zur Herstellung einer dentalen Prothesenbasis zur Herstellung einer Totaldentalprothese oder wenigstens einer Teildentalprothese unter Anwendung eines erfindungsgemäßen Verfahrens zur Herstellung eines Prothesenbasishalbzeugs können auch die folgenden Verfahrensschritte vorgesehen sein:
1) Befestigen des Prothesenbasishalbzeugs in einer CAM-Vorrichtung zum Abtragen von Material des Prothesenbasishalbzeugs mit einem CAM-Verfahren und
2) Abtragen von Material des Prothesenbasishalbzeugs mit der CAM-Vorrichtung auf der Basis des berechneten ersten Modells (A) der Prothesenbasis.

Die Aufgaben der Erfindung werden auch gelöst durch eine computergesteuerte Vorrichtung zur Umsetzung eines erfindungsgemäßen Verfahrens aufweisend eine Einrichtung zum Erzeugen des Prothesenbasishalbzeugs mit einem Rapid-Prototyping-Verfahren, insbesondere einen 3D-Drucker zum Erzeugen des Prothesenbasishalbzeugs, und aufweisend ein Computersystem, das ein Modul zur Umsetzung der Berechnungen des Verfahrens und ein Modul zur Steuerung der Einrichtung zum Erzeugen des Prothesenbasishalbzeugs aufweist.

Bei dem Computersystem können die Module nicht in einem einzigen Rechner enthalten sein, sondern auf zwei separaten Rechnerstationen arbeiten, wobei die Rechnerstationen dazu Daten übertragen können müssen. Es kann dabei ausreichen, wenn die Daten des Moduls zur Umsetzung der Berechnungen des Verfahrens Daten (beziehungsweise Daten zum zweiten Modell (B) des Prothesenbasishalbzeugs) an das Modul zur Steuerung der Einrichtung zum Erzeugen des Prothesenbasishalbzeugs übertragen werden können. Bevorzugt wird das Computersystem mit einem einzigen Computer ausgeführt, der beide Module aufweist.

Ferner werden die der Erfindung zugrundeliegenden Aufgaben auch gelöst durch ein Prothesenbasishalbzeug hergestellt mit einem erfindungsgemäßen Verfahren zur Herstellung eines dentalen Prothesenbasishalbzeugs.

Schließlich werden die der Erfindung zugrundeliegenden Aufgaben auch gelöst durch eine Prothesenbasis hergestellt mit einem erfindungsgemäßen Verfahren zur Herstellung einer dentalen Prothesenbasis.

Der Erfindung liegt die überraschende Erkenntnis zugrunde, dass ein Prothesenbasishalbzeug vorkonfektioniert werden kann, so dass die Herstellung der Prothesenbasis aus dem Prothesenbasishalbzeug einfach und schnell umgesetzt werden kann, wobei nur wenig oder sogar so wenig wie mit dem angewendeten Rapid-Prototyping-Verfahren überhaupt möglich an Material von dem Prothesenbasishalbzeug entfernt werden muss. Hierzu können überraschend die Daten verwendet werden, die bei der Berechnung der Prothesenbasis ohnehin berechnet werden beziehungsweise erzeugt wurden, wobei durch einfaches Hinzufügen beziehungsweise Hinzurechnen von Volumina an den gewünschten Stellen des ersten Modells (A) der Prothesenbasis die notwendigen Toleranzen in dem zweiten Modell (B) des Prothesenbasishalbzeugs enthalten sind und idealerweise nicht mehr oder nur wenig mehr als die notwendigen Toleranzen. Das Prothesenbasishalbzeug ist dann bereits an den jeweiligen Patienten beziehungsweise an dessen Mundraumsituation angepasst, da die am Patienten gemessenen Daten bei der Berechnung des zweiten Modells (B) des Prothesenbasishalbzeugs über das erste Modell (A) der Prothesenbasis eingeflossen sind. Das Verfahren ist einfach, da die genauen und wesentlich aufwendiger zu berechnenden Daten für das erste Modell (A) der Prothesenbasis ohnehin berechnet werden müssen und vorhanden sind und dadurch die Berechnung des zweiten Modells (B) des Prothesenbasishalbzeugs sehr einfach gestaltet werden kann. Im einfachsten Fall kann das zweite Modell (B) des Prothesenbasishalbzeugs einfach durch Vergrößern aller innerhalb des ersten Modells (A) verlaufenden Abmessungen des ersten Modells (A) der Prothesenbasis erzeugt werden. Es wird beispielsweise das erste Modell (A) der Prothesenbasis mit einer vollständigen oder teilweisen Hülle umschlossen, wobei die Hülle eine Dicke hat, die ausreicht um alle Unsicherheiten beziehungsweise Ungenauigkeiten, die bei der Anwendung des Rapid-Prototyping-Verfahrens entstehen, auszugleichen und um alle anderen zusätzlich möglichen Ungenauigkeiten auszugleichen. Durch die Hülle beziehungsweise das zusätzliche Volumen soll sichergestellt werden, dass unter Berücksichtigung aller realistisch zu erwartenden Eventualitäten das Volumen und die Form des Prothesenbasishalbzeugs ausreicht, um daraus die gewünschte Prothesenbasis herauszufräsen, herauszuschneiden oder herauszuschälen.

Mit dem erfindungsgemäßen Verfahren gelingt es so, ein schnelleres und effizienteres Verfahren zur Herstellung von Prothesenbasen zu ermöglichen, bei denen die Werkzeuge der CAM-Vorrichtung zur Herstellung der Prothesenbasis aus dem Prothesenbasishalbzeug geschont werden und der Materialverlust durch die subtraktiven CAM-Verfahren minimiert werden kann. Die Vorteile der Verwendung erfindungsgemäßer Prothesenbasishalbzeuge beziehungsweise erfindungsgemäßer Verfahren liegen unter anderem in den geringeren Fräszeiten, in einem geringeren Materialeinsatz von Prothesenbasismaterial und in einer Schonung der Fräswerkzeuge, das heißt in einem geringeren Verschleiß der Fräswerkzeuge im Vergleich zur Anwendung üblicher Fräsrohlinge.

Bei erfindungsgemäßen Verfahren werden die Prothesenbasishalbzeuge, wie auch die Prothesenbasen und die Dentalprothesen computergestützt mit CAD-Verfahren (CAD - Computer-Aided Design, Deutsch: rechnerunterstützte Konstruktion) konstruiert. Dabei wird zunächst ein Halbzeug einer Prothesenbasis hergestellt, aus der eine Prothesenbasis gefertigt wird, die später auf dem zahnlosen oder bereichsweise zahnlosen Zahnfleisch des Kieferbogens eines Patienten aufliegt. Wenn zunächst ein Arbeitsmodell aus Wachs gefertigt wurde, wird auf dessen Grundlage eine endgültige Prothesenbasis aus Kunststoff gefertigt, wobei auch diese Prothesenbasis wieder mit einem CAM-Verfahren gefertigt werden kann. Die Prothesenzähne werden anschließend individuell gefertigt oder konfektionierte Prothesenzähne individuell gekürzt und in die Prothesenbasis eingesetzt und dort befestigt. Die aus Kunststoff gefertigte Prothesenbasis mit den aufgestellten Prothesenzähnen bildet dann die fertige Dentalprothese.

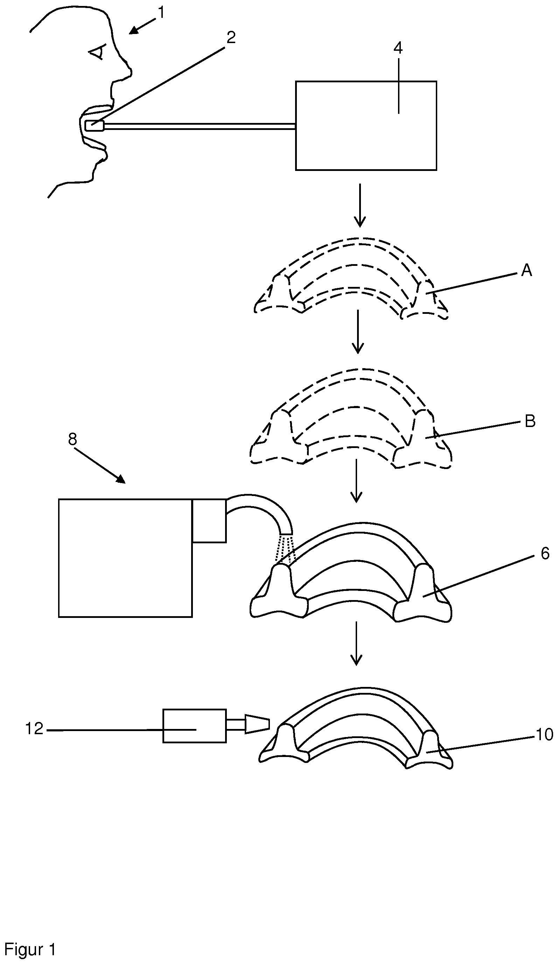

Im Folgenden werden Ausführungsbeispiele der Erfindung anhand einer schematisch dargestellten Figur erläutert, ohne jedoch dabei die Erfindung zu beschränken. Die Figur 1 zeigt eine Übersicht über die erfindungsgemäßen Verfahrensschritte zur Herstellung einer Prothesenbasis 10, bei dem ein erfindungsgemäßes Verfahren zur Herstellung eines Prothesenbasishalbzeugs 6 zum Einsatz kommt.

In einem ersten Schritt wird ein dreidimensionales Bild des Mundraums eines Patienten 1 mit einem Intraoralscanner 2 aufgenommen. Der Mundraum ist zumindest teilweise zahnlos. Der Intraoralscanner 2 kann beispielsweise eine geeignete Stereokamera sein. Die Bilddaten des Intraoralscanners 2 werden an einen Computer 4 übertragen, der aus den Bildinformationen ein dreidimensionales digitales Mundraummodell des für die Prothesenfertigung relevanten Teils des Mundraums berechnet.

Auf Basis des Mundraummodells und gegebenenfalls weiterer Daten, wie beispielsweise Daten zur Okklusion, Position und Ausrichtung der einzusetzenden Dentalprothesen, die Position einer Markierung zur Ausrichtung der zu erzeugenden Prothesenbasis, Daten, die mit Hilfe einer Bissschablone inklusive Bisswällen gewonnen wurden, und/oder Daten, die normalerweise am Patienten zur Einstellung eines Artikulators aufgenommen werden, berechnet der Computer 4 ein dreidimensionales digitales erstes Modell A einer zur Mundraumsituation und gegebenenfalls zu weiteren Parametern (wie der Okklusion) passenden Prothesenbasis. Das Modell A ist in Figur 1 gestrichelt gezeichnet um klarzustellen, dass es sich um ein virtuelles Modell A der Prothesenbasis handelt, das nur als Datenmenge im Computer 4 existiert und gespeichert ist. Das Modell A der Prothesenbasis enthält keine Dentalprothesen, die erst später hinzugefügt werden, deren Position, Ausrichtung und Form aber bereits in die Berechnung des ersten Modells A der Prothesenbasis eingeflossen sind. Das Modell A der Prothesenbasis kann also beispielsweise bereits Ausnehmungen, Vertiefungen und/oder Anlageflächen zur Aufnahme beziehungsweise zum Verbinden von Dentalprothesen enthalten.

Als nächstes wird mit dem Computer 4 aus dem digitalen dreidimensionalen ersten Modell A der Prothesenbasis ein digitales dreidimensionales zweites Modell B eines Prothesenbasishalbzeugs berechnet. Dazu wird an allen Oberflächen des ersten Modells 2 der Prothesenbasis Volumen addiert. Das Modell B ist in Figur 1 ebenfalls gestrichelt gezeichnet um klarzustellen, dass es sich um ein virtuelles Modell B des Prothesenbasishalbzeugs handelt, das nur als Datenmenge im Computer 4 existiert beziehungsweise gespeichert ist. Das erste Modell A der Prothesenbasis kann somit vollständig von dem zweiten Modell B des Prothesenbasishalbzeugs aufgenommen werden. Insbesondere an der Unterseite des Modells A der Prothesenbasis, die die Auflagefläche für den zahnlosen Kiefersattel beziehungsweise das Zahnfleisch bildet (in Figur 1 unten), wird Volumen zugegeben.

Basierend auf dem zweiten Modell B des Prothesenhalbzeugs wird mit Hilfe des Computers 4 beziehungsweise gesteuert vom Computer 4 ein reales Prothesenbasishalbzeug 6 mit Hilfe eines 3D-Druckers 8 oder einer anderen Einrichtung 8 zum Durchführen eines Rapid-Prototyping-Verfahrens aus einem Kunststoff oder einem Wachs hergestellt. Der Kunststoff hat die rosa Farbe von Zahnfleisch. Das so erzeugte Prothesenbasishalbzeug 6 wird anschließend in eine 5-Achs- oder 4-Achs-Fräse 12 oder in eine andere Vorrichtung zum Umsetzen eines subtraktiven und hochgenauen CAM-Verfahrens eingespannt und auf Basis des ersten Modells A der Prothesenbasis wird eine reale Prothesenbasis 10 aus dem Prothesenbasishalbzeug 6 herausgefräst. Die 5-Achs- oder 4-Achs-Fräse 12 arbeitet wesentlich genauer aber auch langsamer als der 3D-Drucker 8. Während also die Grobform als Prothesenbasishalbzeug 6 mit dem schnellen aber ungenauen 3D-Drucker gefertigt wird, wird die anschließende Präzisionsarbeit durch Anwendung der 5-Achs- oder 4-Achs-Fräse 12 durchgeführt. Die 5-Achs- oder 4-Achs-Fräse 12 wird ebenfalls von dem Computer 4 oder von einer anderen Steuerungseinheit (nicht gezeigt) auf Basis des ersten Modells A der Prothesenbasis gesteuert.

Dadurch, dass das zweite Modell B des Prothesenbasishalbzeugs auf Basis des ersten Modells A der Prothesenbasis erzeugt wird oder auf Basis von Daten erzeugt wird, die auch für die Erzeugung des ersten Modells A der Prothesenbasis entscheidend sind, kann der Materialeinsatz minimiert werden und auch die Zeit zur Herstellung der Prothesenbasis in der 5-Achs- oder 4-Achs-Fräse 12 minimiert werden. Hierdurch wird der Verbrauch an Kunststoff oder an Wachs und die Abnutzung des Fräskopfs der 5-Achs- oder 4-Achs-Fräse reduziert und das Verfahren beschleunigt.

Die in der voranstehenden Beschreibung, sowie den Ansprüchen, Figuren und Ausführungsbeispielen offenbarten Merkmale der Erfindung können sowohl einzeln, als auch in jeder beliebigen Kombination für die Verwirklichung der Erfindung in ihren verschiedenen Ausführungsformen wesentlich sein.

### Bezugszeichenliste

- 1: Patient
- 2: 3D-Intraoralscanner
- 4: Computer
- 6: Dentales Prothesenbasishalbzeug
- 8: 3D-Drucker / Einrichtung zum Umsetzen eines Rapid-Prototyping-Verfahrens
- 10: Dentale Prothesenbasis
- 12: CAM-gesteuerte 5-Achs- oder 4-Achs-Fräse
- A: Modell der Prothesenbasis
- B: Modell des Prothesenbasishalbzeugs

## Patentansprüche

1. Verfahren zur Herstellung eines dentalen Prothesenbasishalbzeugs (6) mit den Schritten:
1) Erfassen und Digitalisieren der Mundraumsituation eines Patienten (1), wobei ein digitales dreidimensionales Mundraummodell des Patienten (1) erzeugt wird, oder Bereitstellen eines digitalen dreidimensionalen Mundraummodells der Mundraumsituation eines Patienten (1);
2) Durchführen einer ersten Berechnung, bei der ein digitales dreidimensionales erstes Modell (A) einer Prothesenbasis berechnet wird, wobei das Mundraummodell der Mundraumsituation bei der ersten Berechnung zugrunde gelegt wird;
3) Durchführen einer zweiten Berechnung, bei der ein digitales dreidimensionales zweites Modell (B) eines Prothesenbasishalbzeugs aus dem ersten Modell (A) der Prothesenbasis berechnet wird, wobei zu dem dreidimensionalen Modell (A) der Prothesenbasis zumindest bereichsweise Volumen hinzugefügt wird; und
4) Herstellung des dentalen Prothesenbasishalbzeugs (6) mit einem Rapid-Prototyping-Verfahren, wobei bei dem Rapid-Prototyping-Verfahren ein CAM-Verfahren angewendet wird und das digitale dreidimensionale zweite Modell (B) des Prothesenbasishalbzeugs dem CAM-Verfahren zugrunde gelegt wird.

2. Verfahren nach Anspruch 1, **dadurch gekennzeichnet, dass** beim Durchführen der ersten Berechnung des ersten Modells (A) der Prothesenbasis weitere Daten bei der Berechnung zugrunde gelegt werden, vorzugsweise Daten zur Okklusion, Position und Ausrichtung der einzusetzenden Dentalprothesen, die Position einer Markierung zur Ausrichtung der zu erzeugenden Prothesenbasis, Daten, die mit Hilfe einer Bissschablone inklusive Bisswällen gewonnen wurden, und/oder Daten die normalerweise am Patienten (1) zur Einstellung eines Artikulators aufgenommen werden.

3. Verfahren nach Anspruch 1 oder 2, **dadurch gekennzeichnet, dass**
bei der Herstellung des Prothesenbasishalbzeugs (6) ein Rapid-Prototyping-Verfahren angewendet wird, bei dem das Prothesenbasishalbzeug mit einer Genauigkeit von 100 µm bis 8 mm hergestellt wird, bevorzugt mit einer Genauigkeit von 100 µm bis 1 mm hergestellt wird, besonders bevorzugt mit einer Genauigkeit von 500 µm bis 1 mm hergestellt wird.

4. Verfahren nach einem der vorangehenden Ansprüche, **dadurch gekennzeichnet, dass**
bei der Herstellung des Prothesenbasishalbzeugs (6) ein additives Rapid-Prototyping-Verfahren angewendet wird, insbesondere 3D-Druckverfahren.

5. Verfahren nach einem der vorangehenden Ansprüche, **dadurch gekennzeichnet, dass**
bei der Herstellung des Prothesenbasishalbzeugs (6) eines der Verfahren aus der folgenden Liste angewendet wird:
Fused Layer Modeling/Manufacturing (FLM) von Kunststoffen oder Wachsen, Fused Deposition Modeling (FDM) von Kunststoffen oder Wachsen, insbesondere von Acrylnitril-Butadien-Styrol-Copolymerisat oder Polylactid, Laminated Object Modelling (LOM) von Kunststofffolien, Layer Laminated Manufacturing (LLM) von Kunststofffolien, Elektronenstrahlschmelzen (EBM) von Kunststoffen oder Wachsen, Multi Jet Modeling (MJM) von Wachsen oder Kunststoffen, insbesondere von Thermoplasten oder UV-empfindlichen Photopolymeren, Polyamidguss von Polyamiden, Selektives Laserschmelzen (SLM) von Kunststoffen, Selektives Lasersintern (SLS) von Kunststoffen oder Wachsen, insbesondere von Thermoplasten wie Polycarbonate, Polyamide oder Polyvinylchlorid, 3-D-Printing (3DP) von Kunststoffgranulat oder Kunststoffpulver, Space Puzzle Molding (SPM) von Kunststoffen oder Wachsen, Stereolithografie (STL oder SLA) von Kunststoffen oder Wachsen, insbesondere von einem flüssigen Harz, Duromer oder Elastomer, Digital Light Processing (DLP) von photopolymerisierbaren flüssigen Kunststoffen,
wobei das Digital Light Processing (DLP) von photopolymerisierbaren flüssigen Kunststoffen und die Stereolithografie (STL oder SLA) von Kunststoffen oder Wachsen, insbesondere mit einem flüssigen Harz, Duromer oder Elastomer, bevorzugt werden.

6. Verfahren nach einem der vorangehenden Ansprüche, **dadurch gekennzeichnet, dass**
das Prothesenbasishalbzeug (6) aus einem Kunststoff oder einem Wachs hergestellt wird, insbesondere aus einem rosa oder zahnfleischfarbenen Kunststoff hergestellt wird, wobei als Kunststoff bevorzugt ein Polymethylmethacrylat (PMMA) verwendet wird.

7. Verfahren nach einem der vorangehenden Ansprüche, **dadurch gekennzeichnet, dass**
bei der zweiten Berechnung zur Berechnung des digitalen dreidimensionalen zweiten Modells (B) des Prothesenbasishalbzeugs zumindest bereichsweise ein Abstandsvektor zu dem ersten Modell (A) der Prothesenbasis addiert wird, bevorzugt allseitig oder an jeder Oberfläche des ersten Modells (A) der Abstandsvektor zu dem ersten Modell (A) der Prothesenbasis addiert wird, wobei der Abstandsvektor senkrecht zu der Oberfläche des ersten Modells (A) orientiert ist und der Betrag des Abstandsvektors zwischen 100% und 200% so groß gewählt wird, wie die Genauigkeit des angewendeten Rapid-Prototyping-Verfahrens, bevorzugt zwischen 100% und 150% so groß gewählt wird, wie die Genauigkeit des angewendeten Rapid-Prototyping-Verfahrens.

8. Verfahren nach einem der vorangehenden Ansprüche, **dadurch gekennzeichnet, dass**
bei der Berechnung des zweiten Modells (B) des Prothesenbasishalbzeugs eine Markierung an der Oberfläche des Modells eingerechnet wird, die zur Positionierung und Ausrichtung des fertig hergestellten Prothesenbasishalbzeugs (6) angewendet werden kann oder angewendet wird.

9. Verfahren nach einem der vorangehenden Ansprüche, **dadurch gekennzeichnet, dass**
bei der Berechnung des zweiten Modells (B) des Prothesenbasishalbzeugs zumindest an der Gaumenplatte und/oder an der Auflagefläche auf die Zahnbögen des Modells (A) der Prothesenbasis Volumen hinzugefügt wird.

10. Verfahren zur Herstellung einer dentalen Prothesenbasis (10) aufweisend ein Verfahren zur Herstellung eines dentalen Prothesenbasishalbzeugs (6) nach einem der vorangehenden Ansprüche, **dadurch gekennzeichnet, dass**
nach der Herstellung des Prothesenbasishalbzeugs (6) die Prothesenbasis (10) mit einem subtraktiven CAM-Verfahren auf Basis der ersten Modells (A) der Prothesenbasis aus dem Prothesenbasishalbzeug (6) gefertigt wird, insbesondere gefräst wird.

11. Verfahren nach Anspruch 10, **dadurch gekennzeichnet, dass**
als subtraktives CAM-Verfahren ein subtraktives Fräsverfahren angewendet wird, wobei bevorzugt mit dem subtraktiven Fräsverfahren eine Genauigkeit erreicht wird, die höher ist als die Genauigkeit des Rapid-Prototyping-Verfahrens, besonders bevorzugt eine Genauigkeit von zumindest 50 µm erreicht wird, ganz besonders bevorzugt eine Genauigkeit von zumindest 10 µm erreicht wird.

12. Computergesteuerte Vorrichtung zur Umsetzung eines Verfahrens nach einem der Ansprüche 1 bis 11, aufweisend eine Einrichtung (8) zum Erzeugen des Prothesenbasishalbzeugs (6) mit einem Rapid-Prototyping-Verfahren, insbesondere einen 3D-Drucker (8) zum Erzeugen des Prothesenbasishalbzeugs (6), und aufweisend ein Computersystem (4), das ein Modul zur Umsetzung der Berechnungen des Verfahrens und ein Modul zur Steuerung der Einrichtung (8) zum Erzeugen des Prothesenbasishalbzeugs (6) aufweist.

## Claims

1. A method for producing a denture base semi-finished product (6) with the following steps:
1) Recording and digitalizing the oral cavity situation of a patient (1), wherein a digital three-dimensional oral cavity model of the patient (1) is produced, or providing a digital three-dimensional oral cavity model of the oral cavity situation of a patient (1);
2) Implementing a first calculation in which a digital three-dimensional first model (A) of a denture base is calculated, wherein the oral cavity model of the oral cavity situation is used as a basis for the first calculation;
3) Conducting a second calculation, in which a digital three-dimensional second model (B) of a denture base semi-finished product is calculated from the first model (A) of the denture base, wherein volume is added at least in sections to the three-dimensional model (A) of the denture base; and
4) Producing the denture base semi-finished product (6) with a Rapid Prototyping method, wherein with the Rapid Prototyping method, a CAM method is used and the digital three-dimensional second model (B) of the denture semi-finished product is used as the basis for the CAM method.

2. The method according to claim 1, **characterized in that**
when conducting the first calculation of the first model (A) of the denture base, further data is used as a basis for calculation, preferably data relating to the occlusion, position and alignment of the prosthetic teeth to be inserted, the position of a marking for aligning the denture base to the produced, data which has been obtained with the aid of a jaw template including occlusal guides, and/or data which is normally recorded on the patient (1) in order to set an articulator.

3. The method according to claim 1 or 2, **characterized in that**
during the production of the denture base semi-finished product (6), a Rapid Prototyping method is used in which the denture base semi-finished product is produced with a degree of precision of 100 µm to 8 mm, preferably with a degree of precision 100 µm to 1 mm, particularly preferred with a degree of precision of 500 µm to 1 mm.

4. The method according to any one of the preceding claims, **characterized in that** during production of the denture base semi-finished product (6) an additive Rapid Prototyping method is used, in particular a 3D printing method.

5. The method according to any one of the preceding claims, **characterized in that** during the production of the denture base semi-finished product (6), one of the methods from the following list is used:
Fused Layer Modeling/Manufacturing (FLM) of plastics or waxes, Fused Deposition Modeling (FDM) of plastics or waxes, in particular of acrylonitrile butadiene styrene or polylactide, Laminated Object Modeling (LOM) of plastic films, Layer Laminated Manufacturing (LLM) of plastic films, Electron Beam Melting (EBM) of plastics or waxes, Multi Jet Modeling (MJM) of waxes or plastics, in particular of thermoplasts or UV-sensitive photopolymers, polyamide casting of polyamides, Selective Laser Melting (SLM) of plastics, Selective Laser Sintering (SLS) of plastics or waxes, in particular of thermoplasts, particularly preferred of polycarbonates, polyamides or polyvinyl chloride, 3-D-Printing (3DP) of plastic granulate or plastic powder, Space Puzzle Molding (SPM) of plastics or waxes, Stereo Lithography (STL or SLA) of plastics or waxes, in particular of a fluid resin, duromer or elastomer, Digital Light Processing (DLP) of photopolymerizable fluid plastics,
wherein the Digital Light Processing (DLP) of photopolymerizable fluid plastics and Stereo Lithography (STL or SLA) of plastics or waxes, in particular with a fluid resin, duromer or elastomer, are particularly preferred.

6. The method according to any one of the preceding claims, **characterized in that** the denture base semi-finished product (6) is made of a plastic or wax, in particular a pink or gum-colored plastic, wherein as plastic, a polymethyl methacrylate (PMMA) is preferably used.

7. The method according to any one of the preceding claims, **characterized in that** with the second calculation for calculating the digital three-dimensional second model (B) of the denture base semi-finished product, at least in sections, a distance vector to the first model (A) of the denture base is added, preferably on all sides or on each surface of the first model (A) the distance vector to the first model (A) of the denture base is added, wherein the distance vector is oriented vertically to the surface of the first model (A) and the value of the distance vector is selected between 100% and 200% to be as large as the degree of precision of the Rapid Prototyping method used, preferably selected between 100% and 150% to be as large as the degree of precision of the Rapid Prototyping method used.

8. The method according to any one of the preceding claims, **characterized in that** when calculating the second model (B) of the denture base semi-finished product, a mark on the surface of the model is included in the calculation which is applicable or is used for positioning and aligning the completed denture base semi-finished product (6).

9. The method according to any one of the preceding claims, **characterized in that** when calculating the second model (B) of the denture base semi-finished product, volume is added at least on the palate plate and/or the contact surface onto the dental arches of the model (A) of the denture base.

10. A method for producing a denture base (10) comprising a method for producing a denture base semi-finished product (6) according to any one of the preceding claims, **characterized in that**
following production of the denture base semi-finished product (6), the denture base (10) is produced, in particular milled, from the denture base semi-finished product (6) using a subtractive CAM method based on the first model (A) of the denture base.

11. The method according to claim 10, **characterized in that**
as a subtractive CAM method, a subtractive milling method is used, wherein preferably, with the subtractive milling method, a degree of precision is achieved which is greater than the degree of precision of the Rapid Prototyping method, particularly preferred, a degree of precision of at least 50 µm is achieved, very particularly preferred, a degree of precision of at least 10 µm is achieved.

12. A computer-controlled device for implementing a method according to the any one of claims 1 to 11, comprising an installation (8) for producing the denture base semi-finished product (6) with a Rapid Prototyping method, in particular a 3D printer (8) for producing the denture base semi-finished product (6), and comprising a computer system (4) which comprises a module for implementing the calculations of the method and a module for controlling the installation (8) for producing the denture base semi-finished product (6).

## Revendications

1. Procédé de fabrication d'un produit semi-fini de base de prothèse (6) avec les étapes :
1) de saisie et de numérisation de l'état de la cavité buccale d'un patient (1), où un modèle numérique tridimensionnel de la cavité buccale du patient (1) est créé, ou de mise au point d'un modèle numérique tridimensionnel de la cavité buccale d'un patient (1) ;
2) d'exécution d'un premier calcul dans lequel un premier modèle (A) numérique tridimensionnel d'une base de prothèse est calculé, où le modèle de la cavité buccale de l'état de la cavité buccale est pris pour base lors du premier calcul ;
3) d'exécution d'un deuxième calcul dans lequel un deuxième modèle (B) numérique tridimensionnel d'un produit semi-fini de base de prothèse est calculé à partir du premier modèle (A) de la base de prothèse, où au moins par endroits du volume est ajouté au modèle (A) tridimensionnel de la base de prothèse ; et
4) de fabrication du produit semi-fini de la base de prothèse (6) dentaire avec un procédé de prototypage rapide, où, lors du procédé de prototypage rapide, on emploie un procédé de FAO et on prend pour base le deuxième modèle (B) numérique tridimensionnel du produit semi-fini de la base de prothèse pour le procédé FAO.

2. Procédé selon la revendication 1, **caractérisé en ce que**
lors de l'exécution du premier calcul du premier modèle (A) de la base de prothèse, de nouvelles données sont prises pour bases lors du calcul, de préférence des données concernant l'occlusion, la position et l'orientation des prothèse dentaires à implanter, la position d'un marquage pour l'orientation de la base de prothèse à créer, des données qui ont été obtenues à l'aide d'une empreinte dentaire des crêtes dentaires inclusives, et/ou de données qui sont normalement relevées sur le patient (1) pour le réglage d'un dispositif d'articulation.

3. Procédé selon la revendication 1 ou la revendication 2, **caractérisé en ce que**,
lors de la fabrication du produit semi-fini de base de prothèse (6), on emploie un procédé de prototypage rapide dans lequel le produit semi-fini de base de prothèse est fabriqué avec une précision de 100 µm à 8 mm, de préférence, est fabriqué avec une précision de 100 µm à 1 mm, de manière particulièrement préférée, est fabriqué avec une précision de 500 µm à 1 mm.

4. Procédé selon l'une des revendications précédentes, **caractérisé en ce que**,
lors de la fabrication du produit semi-fini de base de prothèse (6), on emploie un procédé de prototypage rapide additif, notamment un procédé d'impression en 3D.

5. Procédé selon l'une des revendications précédentes, **caractérisé en ce que**, lors de la fabrication du produit semi-fini de prothèse dentaire (6), l'un des procédés de la liste suivante est employé :
le procédé Fused Layer Modelling/Manufacturing (FML) de matières plastiques ou de cires, le procédé Fused Deposition Modelling (FDM) de matières plastiques ou de cires, notamment d'un copolymère acrylonitrile-butadiène-styrène ou de polylactide, le procédé Laminated Object Modelling (LOM) de feuilles de matière plastique, le procédé Layer Laminated Manufacturing (LLM) de feuilles en matière plastique, la fusion par faisceau d'électrons (EBM) de matières plastiques ou de cires, le procédé Multi Jet Modelling (MJM) de cires ou de matières plastiques, notamment de thermoplastiques ou de polymères photosensibles aux UV, le coulage de polyamide de polyamides, la fusion par laser sélective (SLM) de matières plastiques, le frittage par laser sélectif (SLS) de matières plastiques ou de cires, notamment de thermoplastiques comme les polycarbonates, les polyamides ou le chlorure de polyvinyle, l'impression en 3 D (3DP) de granulés de matières plastiques ou de poudre de matières plastiques, le procédé Space Puzzle Molding (SPM) de matières plastiques ou de cires, la stéréo-lithographie (STL ou SLA) de matières plastiques ou de cires, notamment d'une résine liquide, d'un duromère ou d'un élastomère, le procédé Digital Light Processing (DLP) de matières plastiques liquides photo-polymérisables, où le procédé Digital Light Processing (DLP) de matières plastiques liquides photo-polymérisables et la stéréo-lithographie (STL ou SLA) de matières plastiques ou de cires, notamment avec une résine liquide, un duromère ou un élastomère sont préférés.

6. Procédé selon l'une des revendications précédentes, **caractérisé en ce que**
le produit semi-fini de base de prothèse (6) est fabriqué à base d'une matière plastique ou d'une cire, notamment à base d'une matière plastique rose ou de la couleur de la gencive, où on emploie de préférence un polyméthylméthacrylate (PMMA) en tant que matière plastique.

7. Procédé selon l'une des revendications précédentes, **caractérisé en ce que**
lors du deuxième calcul, un vecteur de distance est additionné au moins par endroits au premier modèle (A) de la base de prothèse pour le calcul du deuxième modèle (B) numérique tridimensionnel du produit semi-fini de base de prothèse, de préférence, le vecteur de distance est additionné au premier modèle (A) de tous les côtés ou sur chaque surface du premier modèle (A), où le vecteur de distance est orienté perpendiculairement par rapport à la surface du premier modèle (A) et la contribution du vecteur de distance est choisie dans une taille entre 100 % et 200 % de la précision du procédé de prototypage rapide employé, de préférence, est choisie dans une taille entre 100 % et 150 % de la précision du prototypage rapide employé.

8. Procédé selon l'une des revendications précédentes, **caractérisé en ce que**
lors du calcul du deuxième modèle (B) du produit semi-fini de base de prothèse, on tient compte d'un marquage sur la surface du modèle qui peut être employé ou est employé pour le positionnement et l'orientation du produit semi-fini de base de prothèse (6) fabriqué terminé.

9. Procédé selon l'une des revendications précédentes, **caractérisé en ce que**
lors du calcul du deuxième modèle (B) du produit semi-fini de base de prothèse, du volume est ajouté au moins sur le palais et/ou sur la surface d'appui sur les arcades dentaires du modèle (A) de la base de prothèse.

10. Procédé de fabrication d'une base de prothèse dentaire (10) présentant un procédé de fabrication d'un produit semi-fini de base de prothèse (6) dentaire selon l'une des revendications précédentes, **caractérisé en ce**
**qu'**après la fabrication du produit semi-fini de base de prothèse (6), la base de prothèse (10) est façonnée, notamment est fraisée, avec un procédé FAO de soustraction sur la base du premier modèle (A) de la base de prothèse à partir du produit semi-fini de base de prothèse (6).

11. Procédé selon la revendication 10, **caractérisé en ce**
**qu'**en tant que procédé FAO de soustraction, on emploie un procédé de fraisage de soustraction, où on atteint de préférence avec le procédé de fraisage de soustraction une précision qui est supérieure à la précision du procédé de prototypage rapide, de manière particulièrement préférée, on atteint une précision d'au moins 50 µm, de manière tout particulièrement préférée, on atteint une précision d'au moins 10 µm.

12. Dispositif commandé par ordinateur pour la réalisation d'un procédé selon l'une des revendications 1 à 11, présentant un dispositif (8) destiné à créer le produit semi-fini de base de prothèse (6) avec un procédé de prototypage rapide, notamment, une imprimante 3D (8) destinée à créer le produit semi-fini de base de prothèse (6), et présentant un système informatique (4) qui présente un module pour la transposition des calculs du procédé et un module pour la commande du dispositif (8) destiné à la création du produit semi-fini de base de prothèse (6).
